# EUROPÄISCHE PATENTSCHRIFT

(11) **EP 3 128 137 B1**
(45) Veröffentlichungstag und Bekanntmachung des Hinweises auf die Patenterteilung: **07.10.2020**
(21) Anmeldenummer: 16182840.5
(22) Anmeldetag: 04.08.2016
(51) Int. Cl.: F01K 7/36, F01L 15/00, F01B 3/10, F16K 11/065, F02G 5/02, F02G 5/00, F01K 23/06, F01K 23/10

(54) **ANORDNUNG ZUR STEUERUNG EINES VOLUMENSTROMS AUS ARBEITSMITTELDAMPF MIT HOHEM DRUCK**
ASSEMBLY FOR CONTROLLING A FLOW OF WORKING STEAM WITH HIGH PRESSURE
SYSTEME DE COMMANDE DE DEBIT DE VAPEUR ACTIVE A HAUTE PRESSION

(30) Priorität: 07.08.2015 DE 102015113007
(43) Veröffentlichungstag der Anmeldung: 08.02.2017
(73) Patentinhaber: Mahle International GmbH, 70376 Stuttgart (DE)
(72) Erfinder: BUCHER, Michael, 10961 Berlin (DE); GÜNTHER, Mirko, 14057 Berlin (DE); HÖTGER, Michael, 13595 Berlin (DE)
(74) Vertreter: BRP Renaud & Partner mbB Rechtsanwälte Patentanwälte Steuerberater

(56) Entgegenhaltungen:
- JP-A- 2007 002 761
- SU-A1- 1 539 339
- US-A- 3 651 641
- US-A- 4 134 358
- US-A1- 2006 174 613

## Beschreibung

### Technisches Gebiet

Die Erfindung betrifft eine Anordnung zur Steuerung eines Volumenstroms eines Arbeitsmitteldampfs zwischen einer Arbeitsmitteldampf-Quelle und dem Einlassbereich einer Expansionsmaschine.

Eine solche Anordnung kann insbesondere in Dampfkreisprozessen verwendet werden. Ein Dampfkreisprozess kann beispielsweise die Abwärme eines Verbrennungsmotors in einem Kraftfahrzeug nutzen. Ein Dampferzeuger wird mit der Abwärme beaufschlagt. Dabei wird das in dem Dampfkreisprozess umlaufende Arbeitsmittel erwärmt, verdampft und überhitzt. Das heiße und unter hohem Druck stehende Arbeitsmittel wird in einer Expansionsmaschine expandiert und leistet Arbeit, die beispielsweise als zusätzlicher Fahrzeugantrieb oder zum Antrieb eines Generators oder einer Klimaanlage genutzt werden kann.

Üblicherweise wird der Dampferzeuger von einem Wärmeübertrager gebildet, durch welchen ein Arbeitsmittel zur Aufnahme von Wärme leitbar ist. Das Arbeitsmittel liegt in Form eines Fluides vor. Das Fluid, beispielsweise Wasser, wird durch einen oder mehrere Kanäle geleitet, der von einem Heißgasstrom umströmt ist. Der Heißgasstrom kann das heiße Rauchgas eines Brenners sein, bei dem Brennstoff exotherm verbrannt wird, oder die Abwärme eines Verbrennungsmotors. Beim Umströmen der fluiddurchströmten Kanäle wird Wärme auf das Fluid übertragen, wobei dieses verdampft und überhitzt wird. Es hat bei Verlassen des Dampferzeugers ein hohes Druck- und Temperaturniveau in der Größenordnung von einigen hundert °C.

In der Expansionsmaschine, beispielsweise einer Axialkolbenmaschine, wird das Arbeitsmittel von dem hohen ersten Druckniveau auf ein niedrigeres zweites Druckniveau unter Arbeitsleistung expandiert. Dabei treiben die Kolben eine Welle an, welche beispielsweise zum Bewegen eines Fahrzeugs dient. Das expandierte Fluid wird in einem Kondensator gekühlt und verflüssigt und dem Fluidkreislauf über eine Pumpe erneut zugeführt. Je höher die Druck- und Temperaturdifferenz, umso höher ist der Wirkungsgrad der Anlage.

Als Arbeitsmittel kann Wasser verwendet werden, dessen Dampf unter Abgabe von Arbeit entspannt wird. Eine im Dampfkreisprozess hinter der Expansionsmaschine angeordnete Kondensatoranordnung dient zur Verflüssigung des expandierten Arbeitsmittels. Typische Temperaturen des Arbeitsmittels liegen bei einigen hundert °C für den energiereichen Dampfzustand und bei Wasser bei 100°C als Kondensationstemperatur. Das kondensierte Arbeitsmittel wird einem Arbeitsmittelreservoir zugeführt, wo es ohne Verluste wieder für den Dampfkreisprozess zur Verfügung steht.

### Stand der Technik

Ein Dampfkreisprozess ist zum Beispiel aus der DE 10226445 C1 oder WO 2005/001248 A1 bekannt. Dort wird ein Kreislauf der eingangs genannten Art beschrieben. Als Arbeitsmittel wird Speisewasser verwendet. Das Wasser wird in einem Verdampfer verdampft. Der Dampf wird in einer Expansionsmaschine unter Arbeitsleistung expandiert. Nach der Expansion wird der Dampf in einem Kondensator kondensiert und mittels einer elektrisch oder mechanisch betriebenen Pumpe einem Reservoir zugeführt, aus welchem es für den Kreislauf erneut zur Verfügung steht. Die beschriebene Arbeitsmaschine wird zum Beispiel als Hilfsaggregat in Kraftfahrzeugen eingesetzt.

Die beschriebenen Anordnungen können überhitzen und es kann Überdruck entstehen, wenn dem Dampfkreisprozess beispielsweise zu viel Wärme zugeführt wird. Dann kann die Expansionsmaschine Schaden nehmen. Gleichzeitig darf kein flüssiges Arbeitsmedium durch die Expansionsmaschine geleitet werden.

Die DE 10 2011 052 481 A1 offenbar eine Axialkolbenmaschine mit einer Welle und mit einer Zylinderanordnung, die ein Zylindergehäuse und Zylinder sowie in den Zylindern geführten Kolben zum Antrieb der Welle umfasst. Die Zylinder weisen jeweils eine mit einer Einlasssteuerung gesteuerte Einlassöffnung für ein Arbeitsmedium und eine Auslassöffnung auf. In der Axialkolbenmaschine sind Kanäle vorgesehen, welche die Endbereiche der Zylinder miteinander verbinden, so dass der Kolben beidseitig mit Arbeitsmedium beaufschlagbar und das Arbeitsmedium zweistufig expandierbar ist.

Die DE 10 2010 036 917 A1 behandelt eine Axialkolbenmaschine mit einer Welle und mit einer Zylinderanordnung, die Zylinder und darin geführte Kolben zum Antrieb der Welle umfasst. Die Zylinder weisen jeweils eine mit einer Einlasssteuerung gesteuerte Einlassöffnung für ein Arbeitsmedium und eine Auslassöffnung auf. Die Einlasssteuerung umfasst einen von der Welle angetriebenen Schließkörper mit einem außerachsialen Durchgang. Besagter Durchgang überstreicht bei Rotation des Schließkörpers die Einlassöffnungen. Der Schließkörper ist in einer Einlasskammer für das Arbeitsmedium mit erhöhtem Druck angeordnet, so dass Arbeitsmedium zum Expandieren durch den Durchgang und die Einlassöffnung in den zugehörigen Zylinder leitbar ist.

Die DE 102 21 594 A1 offenbart eine Vorrichtung und ein Verfahren zum wirkungsgradoptimierten Betreiben eines durch eine Turbine angetriebenen Generators. Besagter Generator erzeugt elektrische Ausgangsspannungen mit variabler Ausgangsfrequenz, aus welchen durch Umrichten eine konstante Netzspannung erzeugt werden kann. Aus vor und hinter der Turbine ermittelten, thermodynamischen Prozessparametern eines Dampfkreislaufs werden aufgrund empirisch vorbekannter Zusammenhänge wirkungsgradoptimierte Sollwerte für die Drehzahlen der Turbine ermittelt. Dies geschieht durch Vergleich wirkungsgradoptimierter Sollwerte mit Ist-Drehzahlen besagter Turbine sowie durch Variation der Öffnungsstellung eines Stellventils.

Die US 2012 / 0073294 A1 behandelt ein Rankine-System in einem Fahrzeug. Der Rankine-Kreislauf dieses Systems umfasst einen Drucksensor, einen Temperaturdetektor und einen Kontroller. Besagter Kontroller steuert den Betrieb eines Strömungsventils, mittels welchem der Fluidstrom des Arbeitsfluids durch einen Bypasskanal eingestellt werden kann, und zwar in Abhängigkeit von einem Überhitzungsgrad des Arbeitsfluids. Dieser kann mithilfe von mit dem Kontroller zusammenwirkenden Druck- und Temperatursensoren bestimmt werden.

Die US 2004/0211180 A1 behandelt eine Fluidmaschine für ein Wärmerückgewinnungssystem einer Brennkraftmaschine. Die Fluidmaschine umfasst eine mit der Brennkraftmaschine zusammenwirkende Riemenscheibe sowie eine Expansionsmaschine und einen Kompressor, der von der Riemenscheibe und der Expansionsmaschine angetrieben wird.

Die US 2,651,641 A behandelt eine Anordnung mit allen Merkmalen des Oberbegriffs des Anspruchs 1.

Die US 2006/174 613 A1 behandelt eine Dampfmaschine mit verbessertem Einlass- und Abgasstrom, die durch getrennte Paare von Einlass- und Auslassöffnungen bereitgestellt wird, die an beiden Enden eines Dampfantriebszylinders angeordnet sind. Ein an den Antriebszylinder angrenzendes Schieberventil sorgt für eine zeitgesteuerte Abdichtung der Einlass- und Auslassöffnungen während des Betriebs. Der Ausstoß wird durch die Bereitstellung von zwei Ausstoßwegen aus dem Zylinder erleichtert. Die Auslassöffnungen können auf ein bestimmtes Durchflussvolumen eingestellt werden.

### Offenbarung der Erfindung

Es ist Aufgabe der Erfindung, eine wirtschaftlich herstellbare und zuverlässige Anordnung zu schaffen, mit welcher Arbeitsmittel an der Expansionsmaschine vorbeigeleitet werden kann und welche die Expansionsmaschine vor Schäden durch Überdruck schützt.

Erfindungsgemäß wird die Aufgabe gelöst durch
(a) eine Zufuhrleitung für ankommenden Arbeitsmitteldampf;
(b) einen Verbindungsbereich zwischen Zufuhrleitung und Einlassbereich;
(c) einen Bypasskanal, welcher vom Verbindungsbereich ausgehend an dem Einlassbereich vorbei geführt ist;
(d) einen im Verbindungsbereich lateral zum Einlassbereich und dem Bypasskanal zwischen einer Betriebsstellung und einer Leerlaufstellung verschiebbar geführten Flachschieber
(e) wenigstens zwei Durchgängen oder Verbindungskanälen im oder am Flachschieber und/oder Gehäuse, die derart positioniert sind, dass
(f) ein Durchgang im Flachschieber in der Betriebsstellung eine Verbindung zwischen dem Verbindungsbereich und dem Einlassbereich herstellt; und
(g) ein Durchgang oder Verbindungskanal in der Leerlaufstellung eine Verbindung zwischen dem Verbindungsbereich und dem Einlassbereich herstellt, während ein anderer Durchgang oder Verbindungskanal eine Verbindung zwischen dem Verbindungsbereich und dem Bypasskanal herstellt.

Vorzugsweise ist vorgesehen, dass die Durchgänge oder Verbindungskanäle von wenigstens zwei in Verschiebungsrichtung versetzt angeordneten Durchgängen im Flachschieber gebildet sind. Es ist aber auch denkbar, die Verbindung zwischen Verbindungsbereich und Einlassbereich in der Leerlaufstellung durch gezielte Leckage am Flachschieber vorbei oder durch einen Verbindungskanal oder eine Rinne in der Gehäuseinnenwandung oder in der Außenseite des Flachschiebers zu verwirklichen.

Generell kann der Flachschieber auch zylindrisch ausgebildet sein. Dies bedeutet, dass dieser somit nicht unbedingt einen rechteckigen Querschnitt haben muss, sondern auch einen kreisförmigen oder einen kreisförmigen mit einer Abflachung oder einen ovalen Querschnitt haben kann. Bei einem komplett kreisförmigen Querschnitt ist der Flachschieber selbstverständlich gegen ein Verdrehen zu sichern, um einen ungehinderten Fluiddurchgang durch die Durchgänge sicherstellen zu können.

Es kann ferner vorgesehen sein, dass in der Betriebsstellung nur die Verbindung zwischen Verbindungsbereich und Einlassbereich besteht und alle anderen Durchgänge blockiert sind. Erfindungsgemäß ist vorgesehen, dass der Durchgang, der die Verbindung zwischen Verbindungsbereich und Einlassbereich in der Betriebsstellung herstellt, einen um einen Faktor 2 größeren Durchmesser hat als der Durchgang, der die Verbindung zwischen Verbindungsbereich und Einlassbereich in der Leerlaufstellung herstellt.

Die Erfindung schafft eine Anordnung, bei der immer Arbeitsmittel durch die Expansionsmaschine geleitet wird. In der Betriebsstellung wird der gesamte Volumenstrom durchgeleitet und maximale Leistung erreicht. In der Leerlaufstellung wird der überwiegende Teil des Arbeitsmittels durch einen Bypass geleitet. Ein geringer Teil des Arbeitsmittels gelangt aber weiterhin in die Expansionsmaschine. Mit diesem Teil kann die Anordnung vorgewärmt oder auf Temperatur gehalten werden. Die Verwendung eines Flachschiebers, der lateral zur Strömungsrichtung bewegt wird, hat den Vorteil, dass nur geringe Kräfte aufgewandt werden müssen. Durch eine geringe Vorspannung kann erreicht werden, dass der Flachschieber bei Ausfall von Steuerkomponenten oder Komponenten des Dampfkreislaufs immer in die Leerlaufstellung gedrückt wird. Dann wird Schaden an der Expansionsmaschine durch Überdruck vermieden.

Vorzugsweise ist dabei vorgesehen, dass Durchgänge im Gehäuse und im Flachschieber derart ausgebildet sind, dass der effektive Strömungsquerschnitt für die Verbindung zwischen Verbindungsbereich und Einlassbereich in der Betriebsstellung größer ist, als der effektive Strömungsquerschnitt für die Verbindung zwischen Verbindungsbereich und Bypasskanal in der Leerlaufstellung. Der Bypassstrom wird dadurch anders als der Hauptstrom des Arbeitsmittels in der Betriebsstellung gedrosselt.

Vorzugsweise ist vorgesehen, dass der Flachschieber mit einem Steuerdruck beaufschlagt ist. Dann kann die Ventilanordnung über die Überdrucksicherung hinaus gesteuert betätigt werden.

Eine besonders bevorzugte Ausgestaltung der Erfindung sieht vor, dass
(a) der Flachschieber in einer Ausnehmung in einem Gehäuse geführt ist;
(b) der Flachschieber teilweise aus dem Gehäuse herausragt oder mit einem Verbindungsteil außerhalb des Gehäuses verbunden ist;
(c) eine Membran, ein Faltenbalg oder ein anderes flexibles Material um den aus dem Gehäuse herausragenden Teil des Flachschiebers oder des Verbindungsteils herum abdichtend mit dem Gehäuse einerseits und mit dem Flachschieber oder dem Verbindungsteil andererseits verbunden ist; und
(d) der Flachschieber oder das Verbindungsteil von einer Kraft gegen die vom Arbeitsmitteldruck auf die Membran erzeugte Kraft in die Betriebsstellung bewegbar ist.

Mit einer solchen Abdichtung ist es auch möglich, sehr hohe Drücke, wie sie in Dampfkreisprozessen auftreten, mit geringen Reibungsverlusten zu verwirklichen.

Ein Steuerdruck kann insbesondere mittels einer Druckdose erzeugt werden. Dabei kann vorgesehen sein, dass die Druckdose eine wirksame Fläche hat, die in einem Verhältnis zur Fläche des Flachschiebers steht, das größer ist, als das Verhältnis zwischen dem maximalen Arbeitsmitteldruck und dem Gasdruck in der Druckdose. Dann braucht kein hoher Druck bereitgestellt werden. Der in Lastkraftwagen häufig ohnehin verfügbare Luftdruck kann durch die Übersetzung zusätzlich zur Steuerung des Ventils verwendet werden.

Bei einer Ausgestaltung der Erfindung ist vorgesehen, dass der Flachschieber entgegen der Kraft des Arbeitsmitteldrucks vom Druck einer Feder beaufschlagt ist. Die Feder kann zur Überwindung des Arbeitsmitteldrucks zusätzlich zu Luftdruck oder anderen Kraftelementen verwendet werden. Dann braucht ggf. keine Übersetzung erfolgen, sondern es wird lediglich ein Steuerdruck ausgeübt.

Vorzugsweise ist eine Druckausgleichsbohrung zwischen der Zufuhrleitung und dem Bereich zwischen Gehäuse und Membran vorgesehen. Dann herrscht auf der Innenseite der Membran immer Arbeitsmitteldruck.

Bei einer besonders bevorzugten Ausgestaltung der Erfindung weist der Flachschieber ein Schieber-Inlay auf, welches den am Einlassbereich vorbei führenden Durchgang bei Druckunterschieden abdichtet.

Ausgestaltungen der Erfindung sind Gegenstand der Unteransprüche. Ausführungsbeispiele sind nachstehend unter Bezugnahme auf die beigefügten Zeichnungen näher erläutert.

### Kurze Beschreibung der Zeichnungen

- Fig.1: ist eine schematische Darstellung eines Dampfkreisprozesses.
- Fig.2: ist ein Querschnitt durch einen Teil einer Axialkolbenmaschine mit einer druckluftbetätigten Bypassventilanordnung in Betriebsstellung.
- Fig.3: ist ein Querschnitt durch einen Teil einer Axialkolbenmaschine mit einer druckluftbetätigten Bypassventilanordnung in Leerlaufstellung.
- Fig.4: ist ein Querschnitt einer er druckluftbetätigten Bypassventilanordnung in Betriebsstellung entsprechend einem zweiten Ausführungsbeispiel, bei dem die Bypassöffnung und die Arbeitsöffnung im Flachschieber durch einen gemeinsamen Durchgang realisiert werden.
- Fig.5: zeigt die Anordnung aus Figur 4 in Leerlaufstellung.

### Beschreibung des Ausführungsbeispiels

### 1. Ausführungsbeispiel

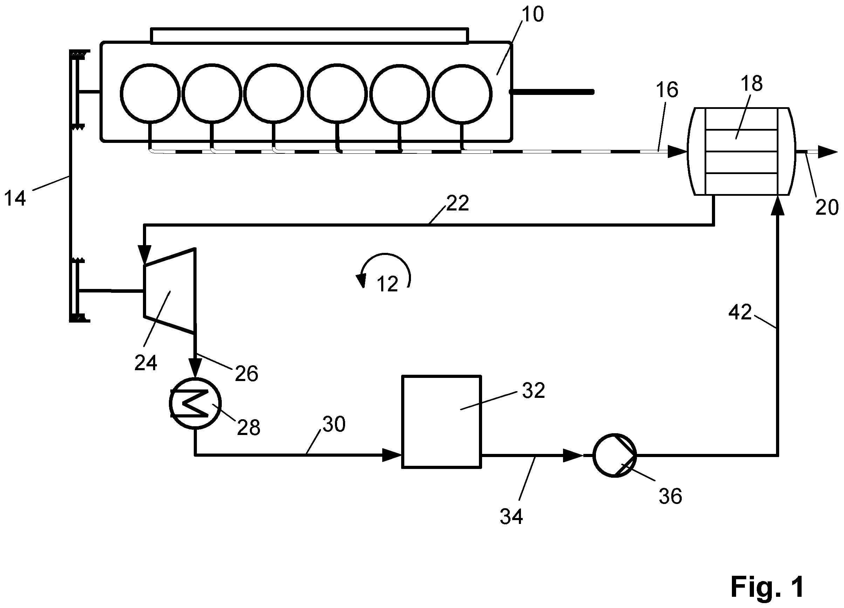

Fig. 1 ist eine schematische Darstellung eines von der Abwärme eines mit 10 bezeichneten Verbrennungsmotors beaufschlagten Dampfkreisprozesses 12. Ein solcher Dampfkreisprozess kann beispielsweise als Hilfsaggregat in Kraftfahrzeugen oder anderen Fahrzeugen und Maschinen eingesetzt werden. Als Verbrennungsmotor 10 ist jeder Motor geeignet, etwa ein Diesel- oder Ottomotor. In einem Verbrennungsmotor 10 wird Treibstoff unter Erzeugung von Abwärme 16 verbrannt. Dabei wird Arbeit an einer Welle 14 geleistet.

Ein Dampferzeuger 18 ist mit der Abwärme 16 des Verbrennungsmotors 10 beaufschlagt. Der Dampferzeuger 18 wird von Arbeitsmittel, beispielsweise Wasser oder Cyclopentan, durchflossen. In dem Dampferzeuger 18 wird die Abwärme 16, d.h. die Wärme aus dem Abgas des Verbrennungsmotors 10, auf das Arbeitsmittel übertragen. Das Arbeitsmittel verdampft und wird überhitzt. Das im Dampferzeuger 18 abgekühlte Abgas wird nach außen abgegeben. Dies ist durch einen Pfeil 20 repräsentiert.

Das heiße, energiereiche Arbeitsmittel fließt in Richtung des Pfeils 22 zu einer Expansionsmaschine, im vorliegenden Ausführungsbeispiel in Form eines Axialkolbenexpanders 24. In dem Axialkolbenexpander 24 wird das Arbeitsmittel unter Arbeitsleistung einer Welle expandiert. Der Axialkolbenexpander 24 kann Arbeit an der gleichen Welle 14 wie der Verbrennungsmotor 10 leisten oder unabhängig einen Klimakompressor, einen Generator oder dergleichen antreiben.

Das expandierte Arbeitsmittel fließt in Richtung des Pfeils 26 zu einem Kondensator 28 und kondensiert. Das kondensierte Arbeitsmittel fließt in Richtung des Pfeils 30 zu einem Arbeitsmittelreservoir 32 und steht dort wieder für den Dampfkreisprozess 12 zur Verfügung. Dies ist durch einen Pfeil 34 repräsentiert. Eine Pumpe 36 pumpt das Arbeitsmittel vom Reservoir 32 zum Dampferzeuger 18. Dies ist durch Pfeil 42 repräsentiert.

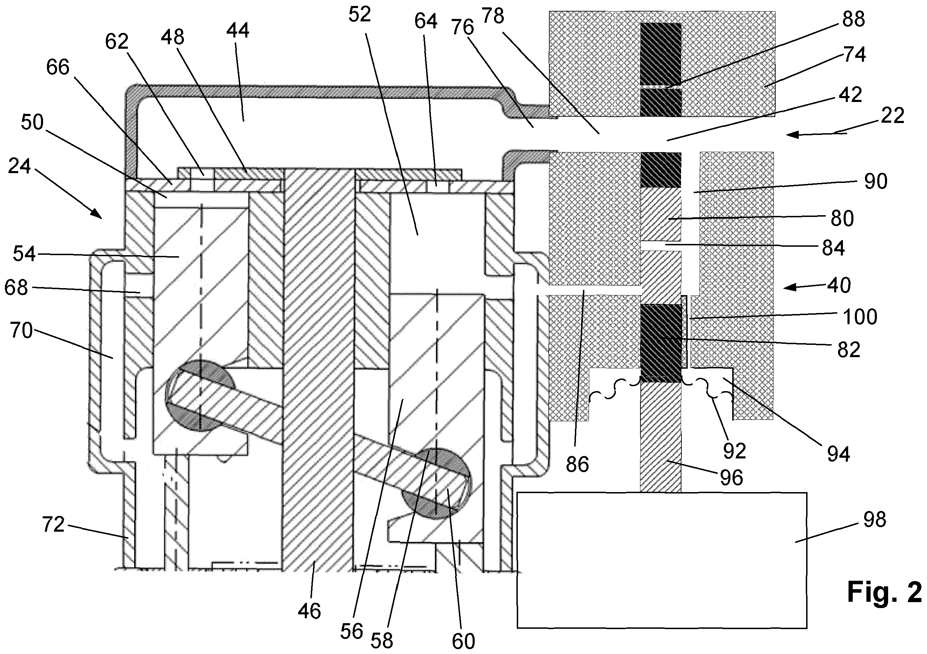

Vor der Axialkolbenmaschine 24 ist eine Ventilanordnung 40 angeordnet, die in Figur 2 im Detail dargestellt ist. Figur 2 zeigt die Ventilanordnung 40 in einer Betriebsstellung. Das energiereiche, durch die Leitung 22 vom Dampferzeuger 18 kommende Arbeitsmittel tritt durch einen Durchgang 42 in der Ventilanordnung 40 in eine Einlasskammer 44 der Axialkolbenmaschine 24.

Kranzförmig um eine Mittenachse sind in einem Gehäuse 72 mehrere, beispielsweise 6 Zylinder angeordnet, von denen zwei, nämlich die Zylinder 50 und 52 in Figur 2 zu erkennen sind. In den Zylindern 50 und 52 sind Kolben 54 und 56 beweglich geführt. Mit den Kolben 54 und 56 wird über Gleitsteine 58 und eine Taumelscheibe 60 eine Welle 46 angetrieben.

Ein von der Welle 46 angetriebener Einlassdrehschieber 48 rotiert um die Mittenachse der Axialkolbenmaschine 24. Mit einer Öffnung 62 gibt der Einlassdrehschieber 48 die Öffnungen 64 im Zylinderkopf 66 zu den Zylindern frei. Dann kann Arbeitsmittel durch die Öffnungen 62 und 64 in die Zylinder eintreten und den zugehörigen Kolben 54 nach unten bewegen. Das expandierte Arbeitsmittel tritt durch seitliche Auslassöffnungen 68 in einen gemeinsamen Auslasskanal 70. Von dort gelangt es, wie in Figur 1 dargestellt, zum Kondensator 28.

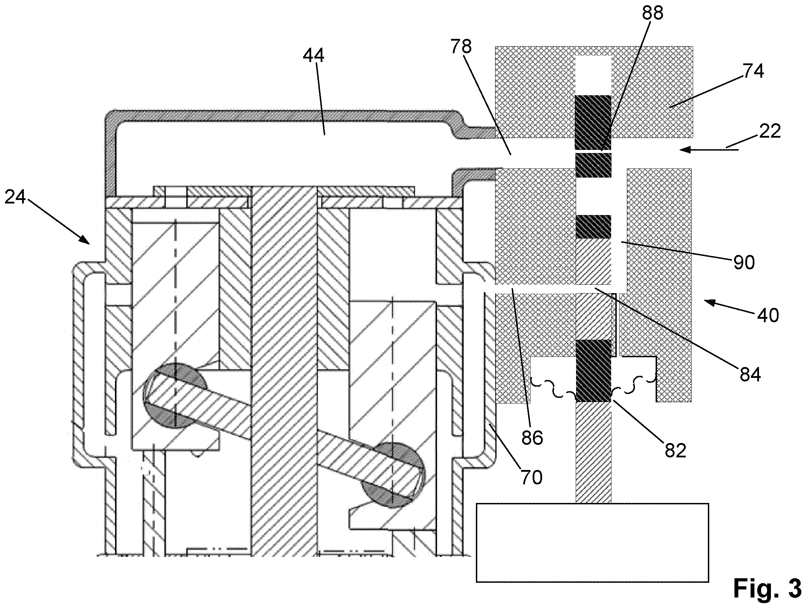

Zum Wegschalten der Axialkolbenmaschine 24 ist ein Bypass vorgesehen, der das Arbeitsmittel direkt vom Dampferzeuger 18 zum Auslasskanal 70 leitet. Dabei ist es vorteilhaft, wenn eine geringe Menge Arbeitsmittel weiterhin durch die Axialkolbenmaschine 24 geleitet wird, damit diese nicht auskühlt und zum Starten vorgewärmt werden kann. Die Ventilanordnung 40 kann daher auf nachstehend beschriebene Weise von der Betriebsstellung in eine in Figur 3 gezeigte Leerlaufstellung bewegt werden.

Die Ventilanordnung 40 umfasst ein an das Gehäuse 72 angebrachtes Ventilgehäuse 74. Das Ventilgehäuse 74 weist einen mit dem Einlass 76 der Einlasskammer 44 fluchtenden Durchgang 78 auf. Der Durchgang 78 hat bei einer Axialkolbenmaschine mit einer Leistung von beispielsweise 20 kW einen Durchmesser von etwa 20 mm. Andere Axialkolbenmaschinen im Leistungsbereich zwischen 1 und 30 kW haben Durchmesser im Bereich zwischen 10 und 30 mm.

Quer zum Durchgang 78 ist ein Flachschieber 82 in einer Gehäuseausnehmung im Ventilgehäuse 74 verschiebbar geführt. Der Flachschieber 82 weist ein Schieber-Inlay 80 mit einem Bypassdurchgang 84 auf, das sich bei Druckunterschieden an die Abdichtungsfläche am Umfang des Bypasskanals 86 auf der dem Schieber zugewandten Seite anpresst. Das Schieber-Inlay 80 besteht aus Stahl und wird in den Flachschieber 82 so eingelegt, dass es lateral mit dem Flachschieber 82 verschoben wird und sich unabhängig von der Lageausrichtung des Flachschiebers 82 ausrichten kann. Dies dient dem Ausgleich von Unebenheiten der Schieberauflage oder dem Verzug des Schiebers umso den Bypass in der Betriebsstellung sicher abzudichten. Das Schieber-Inlay 80 dichtet den Bypassdurchgang 86 gegenüber der dampfbeaufschlagten Ausnehmung im Bereich 90 ab. Das Schieber-Inlay 80 folgt einer Bewegung des Flachschiebers 82 in lateraler Richtung. Der Bypassdurchgang 84 befindet sich in einer Position unterhalb des Durchgangs 42 in Figur 2. Der Abstand der beiden Durchgänge 42 und 84 im Flachschieber ist so gewählt, dass der Bypassdurchgang 84 an einer Gehäusewandung des Ventilgehäuses 74 mündet und dadurch verschlossen ist, wenn der Durchgang 42 im Flachsschieber mit dem Durchgang 78 im Gehäuse 74 fluchtet. Das ist die Betriebsstellung, dargestellt in Figur 2. Wenn der Flachschieber 82 in der Ausnehmung nach unten in Figur 2 bewegt wird, fluchtet der Bypassdurchgang 84 mit einem Bypass-Gehäusedurchgang 86. Der Durchgang 42 mündet dann an einer Gehäusewandung des Ventilgehäuses 74 und ist dadurch verschlossen. Das ist die in Figur 3 dargestellte Leerlaufstellung.

Im vorliegenden Ausführungsbeispiel ist ein weiterer Durchgang 88 als Hilfsdurchgang im Flachschieber 82 vorgesehen. Dieser Hilfsdurchgang 88 mündet in der Betriebsstellung an einer Gehäusewandung des Ventilgehäuses 74 und ist dadurch verschlossen. In der Leerlaufstellung fluchtet der Hilfsdurchgang 88 mit dem Gehäusedurchgang 78 und stellt eine Verbindung zur Einlasskammer 44 her.

Die Gehäuseausnehmung, in der der Flachschieber 82 geführt ist, ist in einem Bereich 90 eingangsseitig verbreitert. Der Bereich erstreckt sich vom Durchgang 78 bis zum Durchgang 86 im Ventilgehäuse 74. Arbeitsmittel, das in Richtung des Pfeils 22 in das Gehäuse eintritt, beaufschlagt über diesen Bereich 90 in der Betriebsstellung sowohl den zur Einlasskammer 44 hin offenen Durchgang 42, als auch den vom Gehäuse 74 verschlossenen Bypassdurchgang 84. In der Leerlaufstellung sind alle drei Durchgänge, nämlich der vom Gehäuse 74 verschlossene Durchgang 42, der zur Einlasskammer 44 hin offene Hilfsdurchgang 88 und der zum Auslasskanal 70 hin offene Bypassdurchgang 84 mit Arbeitsmittel beaufschlagt.

Der Bypassdurchgang 84 und der zugehörige Durchgang 86 für den Bypass im Ventilgehäuse 74 hat einen geringeren Durchmesser, als der Durchgang 42 und der Durchgang 78 für den normalen Betrieb. Dieser liegt bei der oben genannten Leistung von 20 kW bei etwa 15 mm. Andere Leistungen im Bereich von 1 bis 30 kW haben Durchmesser zwischen 0,5 und 30 mm. Der Hilfsdurchgang 88 hat einen noch geringeren Durchmesser, als der Bypassdurchgang 84. Dieser liegt bei der oben genannten Leistung von 20 kW bei etwa 1 mm. Andere Leistungen im Bereich von 1 bis 30 kW haben Durchmesser zwischen 0,05 und 2 mm.

Die Ventilanordnung arbeitet wie folgt: Im normalen Betrieb befindet sich das Ventil 40 in der in Figur 2 gezeigten Betriebsstellung. Dann sind der Hilfsdurchgang 88 und der Bypassdurchgang 84 vom Gehäuse 74 blockiert. Der Durchgang 42 fluchtet mit dem Gehäusedurchgang 78. Arbeitsmittel kann in vollem Umfang in die Einlasskammer 44 der Expansionsmaschine 24 geleitet werden. Wenn die Expansionsmaschine 24 zugeschaltet werden soll, wird der Flachschieber aus der Leerlaufstellung in die Betriebsstellung geschoben. Wenn die Expansionsmaschine 24 weggeschaltet werden soll, bewegt sich der Flachschieber in die Leerlaufstellung zurück.

In der in Figur 3 dargestellten Leerlaufstellung ist der Durchgang 42 vom Gehäuse 74 blockiert. Der überwiegende Teil des Arbeitsmittels gelangt durch die erweiterte Ausnehmung im Bereich 90 in den Bypassdurchgang 84 und durch den mit dem Bypassdurchgang 84 fluchtenden Gehäusedurchgang 86 in den Auslasskanal 70. Ein geringerer Teil des Arbeitsmittels gelangt durch den Hilfsdurchgang 88 und den Gehäusedurchgang 78 weiterhin in die Einlasskammer 44. Dort durchläuft es die Expansionsmaschine und gelangt anschließend ebenfalls in den Auslasskanal 70. Von dort wird das Arbeitsmittel auf übliche Weise zum Kondensator geleitet. Die Ventilanordnung 40 wird also nicht gegen den Dampfdruck des Arbeitsmittels, sondern quer dazu betätigt.

Der Flachschieber 82 muss gegenüber dem Gehäuse 74 entsprechend den herrschenden hohen Drücken von beispielsweise 40 bar abgedichtet werden. Hierfür ist im vorliegenden Ausführungsbeispiel eine Metallmembran 92 vorgesehen, die einerseits in eine Gehäuseausnehmung 94 eingeschweißt ist und durch die andererseits der Flachschieber 82 abdichtend geführt ist. Die Metallmembran 92 ist flexibel und erlaubt bei guter Dichtung die Bewegung des Flachschiebers 82 zwischen Betriebs- und Leerlaufstellung.

Der Flachschieber 82 ist mit einem Verbindungsteil 96 fest verbunden. Das Verbindungsteil 96 ist außen mit Druck aus einer Druckdose 98 beaufschlagt. Andererseits ist die Membran 92 innen über eine Druckausgleichsbohrung 100 mit dem Arbeitsmitteldruck beaufschlagt. Durch Druckübersetzung im Verhältnis 1:4 von ca. 10 bar in der Druckdose auf ca.40 bar maximalen Arbeitsmitteldrucks kann der Flachschieber 82 in seiner Lage gehalten werden. Dies wird durch die Größenverhältnisse der Druckdose im Verhältnis zur Fläche der Metallmembran auf eine 4-fache Fläche erreicht. Statt einer Metallmembran 92 können auch andere flexible Elemente, wie etwa ein Faltenbalg, verwendet werden.

Wenn die Kraft des Arbeitsmitteldrucks auf die Metallmembran 92 geringer ist, als die Kraft durch die Druckdose 98 wird der Flachschieber 82 in die Betriebsstellung bewegt. Bei Absenken des Drucks in der Druckdose 98 wird der Schieber wieder in die Leerlaufstellung gedrückt. Das Ventil 40 ist also bei Ausfall der Steuerung oder der Druckluft und insbesondere auch bei Überdruck im Dampfkreisprozess in der Leerlaufstellung.

Zusätzlich zur Druckluft oder statt der Druckluft kann auch eine Feder und/oder ein elektrisch betätigter Aktor vorgesehen sein, welche Kraft auf das Verbindungsteil 96 gegen den Arbeitsmitteldruck ausüben. Durch geeignete Steuerung der Druckluft kann der Flachschieber 82 in die gewünschte Steuerung bewegt werden.

Die beschriebene Anordnung hat den Vorteil, dass sie mit der Metallmembran 92 leicht abzudichten ist. Der Flachschieber 82 wird bei Überdruck in die Leerlaufstellung bewegt, bei der das Arbeitsmittel durch den Bypassdurchgang direkt in den Auslasskanal 70 gelangt. Auf diese Weise ist die Expansionsmaschine 24 auf einfache Weise gegen Schaden durch Überdruck gesichert. Die Anordnung ist einfach aufgebaut und kostengünstig herstellbar.

### 2. Ausführungsbeispiel

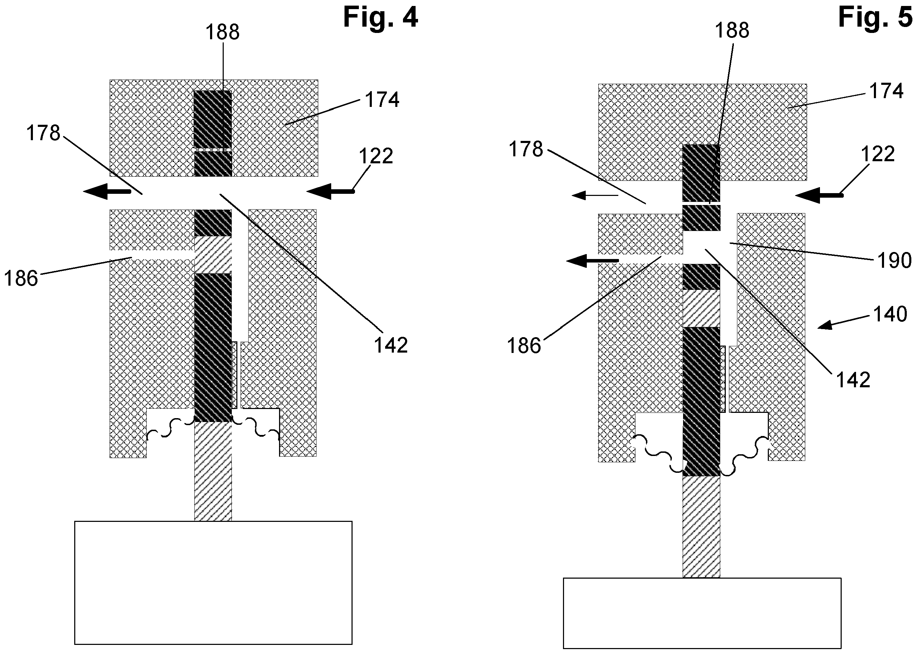

Fig.4 und 5 zeigen ein alternatives Ausführungsbeispiel zur Ventilanordnung 40. Die dort gezeigte Ventilanordnung 140 hat ebenfalls ein Gehäuse 174 mit einer Ausnehmung, die im Bereich 190 verbreitert ist. Auch ist ein Durchgang 178 zur Einlasskammer einer Expansionsmaschine und ein Bypassdurchgang 186 zum Auslasskanal der Expansionsmaschine vorgesehen. Anders als das oben beschriebene Ausführungsbeispiel weist der Flachschieber hier jedoch nur 2 Durchgänge auf. Ein Hilfsdurchgang 188 mit geringem Querschnitt und ein Hauptdurchgang 142 mit größerem Querschnitt. Der Abstand zwischen den Durchgängen ist gerade so gewählt, dass der Hilfsdurchgang 188 im Gehäuse 174 mündet und verschlossen ist, wenn die Ventilanordnung 140 in Betriebsstellung ist, die in Figur 4 dargestellt ist. Dann fluchtet der Hauptdurchgang 142 mit dem Durchgang 178 zum Einlassbereich der Expansionsmaschine. In der Leerlaufstellung, die in Figur 5 dargestellt ist, fluchtet der Hilfsdurchgang 188 mit dem Durchgang 178 zum Einlassbereich der Expansionsmaschine. In dieser Stellung fluchtet der Hauptdurchgang 142 mit dem Bypassdurchgang 186. Der überwiegende Teil des Arbeitsmittels geht also in der Leerlaufstellung durch den Bypassdurchgang 186 direkt zum Auslasskanal der Expansionsmaschine.

Es versteht sich, dass die oben beschriebenen Ausführungsbeispiele nur einen Teil der Möglichkeiten darstellen, die mit der Erfindung möglich sind. Die Erfindung kann mit jeder beliebigen Expansionsmaschine, Turbine, Scroll oder Flügelzelle verwirklicht werden und ist nicht auf die Verwendung einer Axialkolbenmaschine beschränkt. Sie ist weiterhin nicht beschränkt auf die Anzahl der Zylinder, die mit Eingangsdruck beaufschlagt werden. Der Schutzumfang der vorliegenden Erfindung umfasst entsprechend eine Vielzahl von Varianten, die sich dem Fachmann in naheliegender Weise ergeben und wird ausschließlich durch den Schutzumfang der beigefügten Ansprüche beschränkt.

Generell kann der Flachschieber 82 auch zylindrisch ausgebildet sein. Dies bedeutet, dass dieser somit nicht unbedingt einen rechteckigen Querschnitt haben muss, sondern auch einen kreisförmigen oder einen kreisförmigen mit einer Abflachung oder einen ovalen Querschnitt haben kann. Bei einem komplett kreisförmigen Querschnitt ist der Flachschieber 82 selbstverständlich gegen ein Verdrehen zu sichern, um einen ungehinderten Fluiddurchgang durch die Durchgänge 42; 142; 88; 188 sicherstellen zu können.

## Patentansprüche

1. Anordnung (40, 140) zur Steuerung eines Volumenstroms eines Arbeitsmitteldampfs zwischen einer Arbeitsmitteldampf-Quelle (18) und einem Einlassbereich (44, 76) einer Expansionsmaschine (24), umfassend
(a) die Expansionsmaschine (24) mit dem Einlassbereich (44, 76);
(b) ein Gehäuse (74, 174);
(c) eine Zufuhrleitung (22) für ankommenden Arbeitsmitteldampf;
(d) einen Verbindungsbereich (90, 190) zwischen Zufuhrleitung (22) und Einlassbereich (44, 76);
(e) einen Bypasskanal (84, 86; 186), welcher vom Verbindungsbereich (90, 190) ausgehend an dem Einlassbereich (44; 76) vorbei geführt ist;
(f) einen im Verbindungsbereich (90, 190) lateral zum Einlassbereich (76) und dem Bypasskanal (86) zwischen einer Betriebsstellung und einer Leerlaufstellung verschiebbar geführten Flachschieber (82);
(g) wenigstens zwei Durchgänge (42, 84, 88; 142, 188) im oder am Flachschieber (42; 142) und in oder an dem Gehäuse (74; 174) der Anordnung (40, 140), die derart positioniert sind, dass
(h) ein Durchgang (42; 142) im Flachschieber (82) in der Betriebsstellung eine Verbindung zwischen dem Verbindungsbereich (90; 190) und dem Einlassbereich (76) herstellt; und
(i) ein Durchgang (88; 188) im Flachschieber (82) in der Leerlaufstellung eine Verbindung zwischen dem Verbindungsbereich (90; 190) und dem Einlassbereich (76) herstellt, während ein anderer Durchgang (84; 142) eine Verbindung zwischen dem Verbindungsbereich (90; 190) und dem Bypasskanal (86; 186) herstellt,
**dadurch gekennzeichnet, dass**
der Durchgang (42; 142), der die Verbindung zwischen Verbindungsbereich (90; 190) und Einlassbereich (76) in der Betriebsstellung herstellt, einen um einen Faktor 2, größeren Durchmesser hat als der Durchgang (88; 188), der die Verbindung zwischen Verbindungsbereich (90; 190) und Einlassbereich (76) in der Leerlaufstellung herstellt.

2. Anordnung nach Anspruch 1, **dadurch gekennzeichnet, dass** die Durchgänge von wenigstens zwei in Verschiebungsrichtung versetzt angeordneten Durchgängen (42, 84, 88; 142, 188) im Flachschieber (82) gebildet sind.

3. Anordnung nach Anspruch 1 oder 2, **dadurch gekennzeichnet, dass** in der Betriebsstellung nur die Verbindung zwischen Verbindungsbereich (90; 190) und Einlassbereich (76) besteht und alle anderen Durchgänge (84, 88; 188) blockiert sind.

4. Anordnung nach einem der vorgehenden Ansprüche, **dadurch gekennzeichnet, dass** Durchgänge (78, 86, 42, 84; 178, 186) im Gehäuse (74; 174) und im Flachschieber (82) derart ausgebildet sind, dass der effektive Strömungsquerschnitt für die Verbindung zwischen Verbindungsbereich (90; 190) und Einlassbereich (76) in der Betriebsstellung größer ist, als der effektive Strömungsquerschnitt für die Verbindung zwischen Verbindungsbereich (90; 190) und Bypasskanal (86; 186) in der Leerlaufstellung.

5. Anordnung nach einem der vorgehenden Ansprüche, **dadurch gekennzeichnet, dass** der Flachschieber (82) mit einem Steuerdruck beaufschlagt ist.

6. Anordnung nach einem der vorgehenden Ansprüche, **dadurch gekennzeichnet, dass**
(a) der Flachschieber (82) in einer Ausnehmung in einem Gehäuse (74; 174) geführt ist;
(b) der Flachschieber teilweise aus dem Gehäuse (74; 174) herausragt oder mit einem Verbindungsteil (96) außerhalb des Gehäuses (74; 174) verbunden ist;
(c) eine Membran (92), ein Faltenbalg oder ein anderes flexibles Material um den aus dem Gehäuse herausragenden Teil des Flachschiebers oder des Verbindungsteils (96) herum abdichtend mit dem Gehäuse einerseits und mit dem Flachschieber oder dem Verbindungsteil andererseits verbunden ist; und
(d) der Flachschieber (82) oder das Verbindungsteil (96) von einer Kraft gegen die vom Arbeitsmitteldruck auf die Membran erzeugte Kraft in die Betriebsstellung bewegbar ist.

7. Anordnung nach Anspruch 6, **dadurch gekennzeichnet, dass** der Steuerdruck mittels einer Druckdose (98) erzeugt wird.

8. Anordnung nach Anspruch 7, **dadurch gekennzeichnet, dass** die Druckdose (98) eine wirksame Fläche hat, die in einem Verhältnis zur Fläche des Flachschiebers (82) steht, das größer ist, als das Verhältnis zwischen dem maximalen Arbeitsmitteldruck und dem Gasdruck in der Druckdose (98).

9. Anordnung nach einem der vorgehenden Ansprüche 6 bis 8, **dadurch gekennzeichnet, dass** eine Druckausgleichsbohrung (100) zwischen der Zufuhrleitung und dem Bereich (94) zwischen Gehäuse (74; 174) und Membran vorgesehen ist.

10. Anordnung nach einem der vorgehenden Ansprüche, **dadurch gekennzeichnet, dass** der Flachschieber (82) zylindrisch ausgebildet ist.

## Claims

1. Assembly (40, 140) for controlling a volume flow of a working medium vapour between a working medium vapour source (18) and an inlet region (44, 76) of an expansion machine (24), comprising
(a) the expansion machine (24) with the inlet region (44, 76);
(b) a housing (74, 174);
(c) a supply line (22) for incoming working medium vapour;
(d) a connection region (90, 190) between the supply line (22) and the inlet region (44, 76);
(e) a bypass channel (84, 86; 186) which, starting from the connection region (90, 190), is guided past the inlet region (44; 76);
(f) a flat slide (82) guided laterally to the inlet region (76) and the bypass channel (86) slidably between an operating position and an idle position in the connection region (90, 190);
(g) at least two passages (42, 84, 88; 142, 188) in or on the flat slide (42; 142) and in or on the housing (74; 174) of the assembly (40, 140), which are positioned such that
(h) a passage (42; 142) in the flat slide (82) in the operating position establishes a connection between the connection region (90; 190) and the inlet region (76); and
(i) a passage (88; 188) in the flat slide (82) in the idle position establishes a connection between the connection region (90; 190) and the inlet region (76), while another passage (84; 142) establishes a connection between the connection region (90; 190) and the bypass channel (86; 186),
**characterised in that**
the passage (42; 142), which establishes the connection between the connection region (90; 190) and the inlet region (76) in the operating position, has a diameter larger by a factor of 2 than the passage (88; 188), which establishes the connection between the connection region (90; 190) and the inlet region (76) in the idle position.

2. Assembly according to claim 1, **characterised in that** the passages are formed by at least two passages (42, 84, 88; 142, 188) arranged offset in the sliding direction in the flat slide (82).

3. Assembly according to claim 1 or 2, **characterised in that** in the operating position there is only the connection between the connection region (90; 190) and inlet region (76) and all other passages (84, 88; 188) are blocked.

4. Assembly according to any one of the preceding claims, **characterised in that** passages (78, 86, 42, 84; 178, 186) in the housing (74; 174) and in the flat slide (82) are formed in such a way that the effective flow cross-section for the connection between the connection region (90; 190) and inlet region (76) is larger in the operating position than the effective flow cross-section for the connection between the connection region (90; 190) and the bypass channel (86; 186) in the idle position.

5. Assembly according to any one of the preceding claims, **characterised in that** the flat slide (82) is acted upon by a control pressure.

6. Assembly according to any one of the preceding claims, **characterised in that**
(a) the flat slide (82) is guided in a recess in a housing (74; 174);
(b) the flat slide partially projects from the housing (74; 174) or is connected to a connecting part (96) outside the housing (74; 174);
(c) a diaphragm (92), a bellows or other flexible material around the part of the flat slide or the connecting part (96) projecting from the housing is sealingly connected to the housing on the one hand and to the flat slide or the connecting part on the other; and
(d) the flat slide (82) or the connecting part (96) can be moved into the operating position by a force against the force generated by the working medium pressure on the diaphragm.

7. Assembly according to claim 6, **characterised in that** the control pressure is generated by means of a pressure cell (98).

8. Assembly according to claim 7, **characterised in that** the pressure cell (98) has an effective area which has a ratio to the area of the flat slide (82) which is greater than the ratio between the maximum working medium pressure and the gas pressure in the pressure cell (98).

9. Assembly according to any one of the preceding claims 6 to 8, **characterised in that** a pressure compensation hole (100) is provided between the supply line and the region (94) between the housing (74; 174) and the diaphragm.

10. Assembly according to any one of the preceding claims, **characterised in that** the flat slide (82) is cylindrical.

## Revendications

1. Système (40, 140) de commande d'un débit volumique d'une vapeur active entre une source de vapeur active (18) et une zone d'admission (44, 76) d'une machine à expansion (24), comprenant
(a) la machine à expansion (24) comportant la zone d'admission (44, 76) ;
(b) un boîtier (74, 174) ;
(c) une conduite d'alimentation (22) pour de la valeur active entrant ;
(d) une zone de liaison (90, 190) entre conduite d'alimentation (22) et zone d'admission (44, 76) ;
(e) un canal de dérivation (84, 86 ; 186) qui passe à partir de la zone de liaison (90, 190) le long de la zone d'admission (44; 76) ;
(f) un tiroir plat (82) passant de façon à pouvoir coulisser dans la zone de liaison (90, 190) latéralement par rapport à la zone d'admission (76) et au canal de dérivation (86) entre une position de service et une position de vidange ;
(g) au moins deux passages (42, 84, 88 ; 142, 188) dans ou sur le tiroir plat (42 ; 142) et dans ou sur le boîtier (74; 174) du système (40, 140) qui sont positionnés de telle sorte que
(h) un passage (42 ; 142) dans le tiroir plat (82) dans la position de service constitue une liaison entre la zone de liaison (90; 190) et la zone d'admission (76) ; et
(i) un passage (88 ; 188) dans le tiroir plat (82) dans la position de vidange constitue une liaison entre la zone de liaison (90; 190) et la zone d'admission (76) ; tandis qu'un autre passage (84 ; 142) constitue une liaison entre la zone de liaison (90 ; 190) et le canal de dérivation (86 ; 186),
**caractérisé en ce que**
le passage (42 ; 142) qui constitue la liaison entre zone de liaison (90, 190) et zone d'entrée (76) dans la position de service a un diamètre 2 fois plus grand que celui du passage (88; 188) qui constitue la liaison entre zone de liaison (90; 190) et zone d'admission (76) dans la position de vidange.

2. Système selon la revendication 1, **caractérisé en ce que** les passages sont formés d'au moins deux passages (42, 84, 88; 142, 188) disposés de façon décalée dans la direction de déplacement dans le tiroir plat (82).

3. Système selon la revendication 1 ou 2, **caractérisé en ce que** dans la position de service, seule la liaison entre zone de liaison (90; 190) et zone d'admission (76) existe et tous les autres passages (84, 88 ; 188) sont bloqués.

4. Système selon l'une quelconque des revendications précédentes, **caractérisé en ce que** des passages (78, 86, 42, 84; 178, 186) sont formés dans le boîtier (74 ; 174) et dans le tiroir plat (82) de telle sorte que la section d'écoulement effective est plus grande pour la liaison entre zone de liaison (90 ; 190) et zone d'admission (76) dans la position de service que la section d'écoulement effective pour la liaison entre zone de liaison (90 ; 190) et canal de dérivation (86 ; 186) dans la position de vidange.

5. Système selon l'une quelconque des revendications précédentes, **caractérisé en ce que** le tiroir plat (82) est alimenté avec une pression de commande.

6. Système selon l'une quelconque des revendications précédentes, **caractérisé en ce que**
(a) le tiroir plat (82) passe dans un évidement dans un boîtier (74 ; 174) ;
(b) le tiroir plat dépasse partiellement du boîtier (74; 174) ou est relié avec une partie de liaison (96) à l'extérieur du boîtier (74 ; 174) ;
(c) une membrane (92), un soufflet ou un autre matériau flexible autour de la partie dépassant du boîtier du tiroir plat ou de la partie de liaison (96) est relié(e) de façon étanche au boîtier d'une part et au tiroir plat ou à la partie de liaison d'autre part ; et
(d) le tiroir plat (82) ou la partie de liaison (96) peut être déplacé(e) par une force opposée à la force générée par la pression active sur la membrane dans la position de service.

7. Système selon la revendication 6, **caractérisé en ce que** la pression de commande est générée au moyen d'un contenant sous pression (98).

8. Système selon la revendication 7, **caractérisé en ce que** le contenant sous pression (98) a une surface active qui a un rapport à la surface du tiroir plat (82) qui est plus grand que le rapport entre la pression active maximale et la pression de gaz dans le contenant sous pression (98).

9. Système selon l'une quelconque des revendications 6 à 8 précédentes, **caractérisé en ce qu'**un orifice d'égalisation de pression (100) est prévu entre la conduite d'alimentation et la zone (94) entre boîtier (74; 174) et membrane.

10. Système selon l'une quelconque des revendications précédentes, **caractérisé en ce que** le tiroir plat (82) est conçu de façon cylindrique.
